# EUROPEAN PATENT APPLICATION

(11) **EP 2 955 509 A1**
(43) Date of publication of application: **16.12.2015**
(21) Application number: 13874616.9
(22) Date of filing: 19.11.2013
(51) Int. Cl.: G01N 22/04

(54) **MOISTURE METER**

(30) Priority: 06.02.2013 RU 2013105028
(71) Applicant: PCE Deutschland GmbH, 59872 Meschede (DE); The Design Bureau "Fizelektronpribor" Ltd, Samara 443010 (RU)
(72) Inventor: SIZIKOV, Oleg Kreonidovich, Samara 443096 (RU); KONNOV, Vladimir Valerievich, Samara 443056 (RU); RAGAZIN, Denis Nicolaevich, Samarskaya obl., Serglevesky r-n, s. Krasnoseiskoe, 446561 (RU); SILAEV, Konstantin Vladimirovich, Samara 443114 (RU); SEMENOV, Andrey Sergeevich, S. Isakly, Isaklinsky raion, Samarskaya obl. 446570 (RU)
(74) Representative: Feder Walter Ebert
(86) International application number: PCT/RU2013/001036
(87) International publication number: WO 2014/123450

(57) **Abstract**

The moisture meter for bulk and liquid materials comprises: a primary transducer formed by the external shield conductor (4) and signal conductor (5), the space between which is intended for filling with the above-mentioned material, the first end (7) of the signal conductor serving as an input of the primary transducer, and the second end of the above-mentioned signal conductor (5) connected to the shield conductor (4) providing for an electric contact between them at the point of connection; a generator of the probing signal (1) featuring the control input and implemented based on the variable frequency harmonic signal generator; an electronic control device (2) connected to the control input of the above-mentioned generator (1) and implemented with the option to control adjustments of the generator (1) within the working frequency range; a measurement cell (6) comprising the detector (10) connected to the input (7) of the above-mentioned primary transducer; a resistor (8) with one pin connected to the output of the above-mentioned generator (1) and with detector (9) the other pin being connected to above-mentioned input (7) of the primary transducer, the outputs of the detector (9) and detector (10) being connected to a measuring device (3) providing the option of determining humidity by complex permittivity. The moisture meter provides humidity measurements of bulk and liquid materials, increased accuracy, insensitivity to material density variances at low values of humidity.

## Description

### PERTINENT ART

The technical solution is related to measurement equipment which can be used to monitor the humidity of materials, in particular, bulk materials and fluids (e.g. oil products), suspensions.

### PRIOR ART

One known moisture meter (V.K. Benzar. Microwave moisture testing equipment. - Minsk: Vyshaya shkola, 1974, p.p. 226-234) consists of a probing microwave signal generator, a trough filled with test material, transmitting and receiving horn antennas located at the opposite sides of the trough, converter of microwave signal into low-frequency signal connected to the output of the receiving horn antenna and to the input of the measuring device.

With this moisture meter, the humidity of material is determined by attenuation and phase shift of the probing signal that traversed the material. The antennas should be matched with the microwave signal propagation medium; in absence of such matching, the probing signal repeatedly re-reflects at the transition borders from the test material to the antenna, which leads to errors in measurement of attenuation and, consequently, in measurement of humidity. For materials with high moisture content, the measurement error increases due to strong attenuation of the probing signal in them.

From the description of the RF patent No. 2269766, we know of another reflectometry moisture meter consisting of a probing signal generator, an electronic control device connected to the control input of the generator, a measurement device connected to the electronic generator control device, a primary transducer formed by the external shield conductor and the signal conductor, a measurement cell connected between the generator output and the primary transducer input and also connected to the measuring device.

The operating principle of this moisture meter is determining humidity of a material by its permittivity, measuring the time needed for the probing signal to propagate through the primary transducer incorporated into the test material. The accuracy of this moisture meter depends on the measurement error of nanosecond time intervals between the wave-fronts of pulse signals emitted and passed through the material, and read from the reflectometer installed in the measurement cell. The error of the pulse signal wave-front registration is influenced both by dispersion, and attenuation of this signal in a material of high humidity, which reduces the accuracy of measurement.

### NATURE OF THE INVENTION

The objective of the proposed technical solution is improvement of measurement accuracy and providing independence of the measurements from density of the test material at low values of humidity.

Providing high accuracy humidity measurements requires measuring not only the real component of the complex permittivity (which was implemented in the prototype), but simultaneously the imaginary component thereof determined by the value of the probing signal attenuation in the material.

The said objective was implemented via the proposed moisture meter comprising:
a primary transducer formed by the external shield conductor (4) and signal conductor (5) the space between which being intended for filling with the test material, the first end (7) of the signal conductor serving as the input of above-mentioned primary transducer, and the second end of the signal conductor (5) being connected to above-mentioned shield conductor (4) providing electric contact between them at the connection point;
a generator of probing signal (1) featuring the control input and implemented based on a variable frequency harmonic signal generator;
an electronic control device (2) connected to the control input of the above-mentioned generator (1) and implemented with the option to adjust the above-mentioned generator (1) within the working frequency range;
a measurement cell (6) comprising the detector (10) connected to the input (7) of the above-mentioned primary transducer;
a resistor (8) with one pin connected to the output of the above-mentioned generator (1) and with the detector (9) the other pin being connected to the above-mentioned input (7) of the primary transducer, the outputs of the above-mentioned detector (9) and the detector (10) being connected to the measuring device (3) providing the option of determining humidity by the value of the frequency at which the least input impedance of the above-mentioned primary transducer is obtained, and by the value of the ratio of the signals from the outputs of above-mentioned detectors (9, 10) at this frequency.

In one of the preferred embodiments, this control device (2) is implemented as a synthesizer, generating the frequency of the generator (1) by a digital code specified by the measuring device (3) comprising a processor.

In another preferred embodiment, the control device (2) is an analog circuit implemented with the option of adjusting the frequency of the generator (1) to the value providing the least ratio signal (U₁₀ to U₉), while the measuring device (3) is equipped with a unit measuring the frequency.

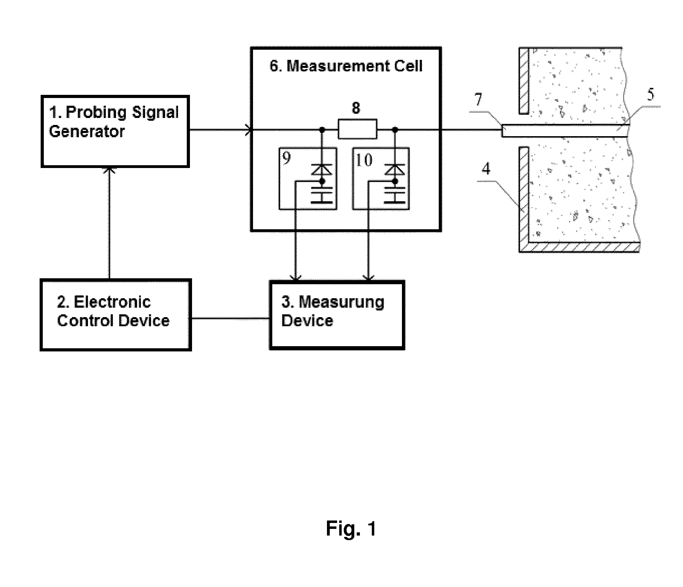

The nature of the proposed technical solution is explained in Fig. 1.

### BRIEF DESCRIPTION OF DRAWINGS

A schematic diagram of the moisture meter is shown in Fig. 1.

### IMPLEMENTATION

The moisture meter comprises a generator 1 of the probing signal, an electronic device 2 for the generator control, a measuring device 3, a primary transducer formed by the shield conductor 4 and the signal conductor 5, a measurement cell 6. The input of the generator 1 control is connected to the electronic control device 2. The measurement cell 6 is connected between the generator output 1 and the input 7 of the primary transducer and also connected to the measuring device 3. The measuring device 3 is connected to the electronic control device 2. The measurement cell 6 comprises the resistor 8 with its first pin connected to the generator 1 output and the second pin connected to the input 7 of the primary transducer, the first detector 9 connected to the first pin of the resistor 8, the second detector 10 connected to the second pin of the resistor 8, the outputs of the detectors being connected to the measuring device 3. The first detector 9 measures voltage at the generator 1 output, the second detector 10 measures voltage at the input 7 of the primary transducer. The generator 1 of the probing signal is implemented based on the adjustable frequency harmonic signal generator.

The operating principle of this moisture meter is determining humidity of liquid or bulk material through its complex permittivity: not only the real component (as in the prototype), but also an imaginary component of this parameter are measured. Then they are used to calculate the material humidity with respect to the material temperature.

The complex permittivity of a material is determined based on measurements of the following parameters:
- resonance frequency of the primary transducer determined in the course of adjustment of the harmonic signal of the generator 1 providing the least input impedance of the primary transducer filled with the material;
- value of the input impedance at the resonance frequency of the primary transducer filled with the material.

The moisture meter operates as follows. The electronic control device 2 adjusts the generator 1 frequency in the working frequency range. In the course of the adjustment, the voltages on the first and the second pins of resistor 8 of measurement cell 6 are measured. The measurements are effected by semi-conductor detectors 9 and 10, converting the high-frequency signals to low-frequency signals. The voltages U₉ and U₁₀ retrieved from the outputs of the first detector 9 and the second detector 10 respectively are fed to the measuring device 3 input. The ratio of the voltages U₁₀ and U₉ is determined in the measuring device 3. The minimal ratio of the voltages (U₁₀/U₉) is reached at the moment when the input impedance of the primary transducer is minimal. Using the measured value of this ratio and the known value of the resistor 8 impedance, the processor of measuring device 3 calculates the input impedance value. At the moment of obtaining the minimum, the frequency of the harmonic signal produced by generator 1 is determined and saved. At known geometrical length of the signal conductor 5, this frequency makes it possible to calculate the electromagnetic wave velocity factor in the test material. Then, basing on the calculated value of the input impedance accounting for the calculated velocity factor, the complex permittivity is determined. Using the conversion charts stored in the processor memory, the humidity value for the test material is calculated. The result obtained is transmitted from measuring device 3 output via a digital interface (e.g., RS485) or through current signal 4...20 mA to an external indicator.

It should be noted that in the proposed moisture meter two possible variants of the measurement process can be implemented.

The first variant is: using the control device 2, the frequency of generator 1 is adjusted in such a way that the ratio of the signals (U₁₀/U₉) at the output of the measurement cell 6 is minimal; when the minimum is obtained, measuring device 3 calculates the frequency of the probing signal and the input impedance value of the primary transducer.

The second variant is: measuring device 3 measures the ratio (U₁₀/U₉) for a number of frequencies from the range around the point of the minimum, i.e. the full frequency response curve of the primary transducer input impedance is recorded.

The resistance value of resistor 8 is chosen based on the reasons that too low a value would reduce sensitivity of detecting the minimum, while too high a value would lead to a loss of accuracy of the signal measurement at the minimum. Pilot versions of the moisture meter demonstrated optimal results with resistor 8 resistance in the range 20...51 Ohms.

At low values of humidity, the resonance frequency has weak dependence on the material humidity, but the value of the resonance frequency can be used to control the amount of material in the primary transducer. The volumetric moisture content is measured by the value of the input impedance of the primary transducer, which allows you to determine bulk humidity independently of the extent of the primary transducer filling.

## Claims

1. The moisture meter comprising:
a primary transducer formed by the external shield conductor (4) and signal conductor (5), the space between being intended for filling with the test material, the first end (7) of the signal conductor serving as an input of the primary transducer, and the second end of the above-mentioned signal conductor (5) being connected to the shield conductor (4) providing for an electric contact between them at the point of connection;
a generator of probing signal (1) featuring the control input and implemented based on the variable frequency harmonic signal generator;
an electronic control device (2) connected to the control input of the above-mentioned generator (1) and implemented with the option to control adjustments of the generator (1) within the working frequency range;
a measurement cell (6) comprising the detector (10) connected to the input (7) of the above-mentioned transducer;
a resistor (8) with one pin connected to the output of the above-mentioned generator (1) and with the detector (9) the other pin being connected to the above-mentioned input (7) of the primary transducer, the outputs of the above-mentioned detector (9) and the detector (10) being connected to the measuring device (3) providing the option of determining humidity by the value of the frequency at which the least input impedance of the above-mentioned primary transducer is obtained, and by the value of the ratio of the signals from the outputs of above-mentioned detectors (9, 10) at this frequency

2. The moisture meter as per Claim 1 **characterized by** the fact that above-mentioned control device (2) is implemented as a synthesizer, generating the frequency of the generator (1) by a digital code specified by the measuring device (3) comprising a processor.

3. The moisture meter as per Claim 1 **characterized by** the fact that above-mentioned control device (2) is an analog circuit implemented with the option of adjusting the frequency of the generator (1) to the value providing the least ratio signal (U₁₀ to U₉), while the measuring device (3) is equipped with a unit measuring the frequency.
